# EUROPEAN PATENT SPECIFICATION

(11) **EP 2 413 003 B1**
(45) Date of publication and mention of the grant of the patent: **06.11.2019**
(21) Application number: 09842307.2
(22) Date of filing: 18.09.2009
(51) Int. Cl.: F16F 9/44, F16F 9/32

(54) **HYDRAULIC SHOCK ABSORBER**
HYDRAULISCHER STOSSDÄMPFER
AMORTISSEUR HYDRAULIQUE

(30) Priority: 25.03.2009 JP 2009074615
(43) Date of publication of application: 01.02.2012
(73) Proprietor: Showa Corporation, Gyoda-shi, Saitama 361-8506 (JP)
(72) Inventor: MURAKAMI, Yosuke, Fukuroi-shi Shizuoka 437-1194 (JP)
(74) Representative: Jenkins, Peter David
(86) International application number: PCT/JP2009/066411
(87) International publication number: WO 2010/109697

(56) References cited:
- GB-A- 2 264 348
- JP-A- 6 234 386
- JP-A- 2004 316 725
- JP-A- 2005 030 534
- JP-A- 2005 352 967
- JP-A- 2007 225 066
- JP-A- 2008 202 801
- JP-U- S6 275 237
- JP-U- 62 075 237
- JP-U- 63 020 544
- US-A- 4 305 486
- US-A- 4 440 273
- US-A1- 2004 011 612

## Description

### TECHNICAL FIELD

The present invention relates to a hydraulic shock absorber such as a front fork.

### BACKGROUND ART

In a front fork (a hydraulic shock absorber) for a motor cycle, as described in Patent Document 1, a vehicle body side tube and an axle side tube are slidably fitted, and a cap sealed and attached to an upper end opening portion of the vehicle body side tube is provided with a regulating portion for regulating a damping force.

### PRIOR ART DOCUMENT

### PATENT DOCUMENT

Patent Document 1: Japanese Patent Application Laid-Open No. 2007-225066

### SUMMARY OF THE INVENTION

### PROBLEM TO BE SOLVED BY THE INVENTION

In the conventional front fork, based on a relationship with a structure in which a damping force regulating rod driven by the regulating portion is arranged on a center axis of the vehicle body side tube, the regulating portion is arranged at the center of the cap in a plan view of the cap.

Accordingly, when the front fork is attached to a vehicle body side bracket of the motor cycle, and a handle bar is retained in an upper portion of the vehicle body side bracket, the handle bar obstructs an operation of the regulating portion by a rider if the regulating portion arranged at the center of the cap is positioned below the handle bar.

Further, in the front fork in which the regulating portion is arranged at the center of the cap, a design of an upper surface of the cap causes a mannerism of an outer appearance and a reduction of an article attraction.

An object of the present invention is to improve an operability of a regulating portion in a hydraulic shock absorber provided with the regulating portion in a cap of a vehicle body side tube, thereby providing a new outer appearance.

### MEANS FOR SOLVING THE PROBLEM

In accordance with claim 1 of the present invention, there is provided a hydraulic shock absorber comprising: a vehicle body side tube; an axle side tube, the vehicle body side tube and the axle side tube being slidably fitted; a cap sealed to an upper end opening portion of the vehicle body side tube; and a single regulating portion provided in the cap. The regulating portion is arranged eccentrically with respect to a center of the cap in a plan view of the cap.

In accordance with claim 2 of the present invention, there is provided a hydraulic shock absorber comprising: an outer tube in a vehicle body side; an inner tube in an axle side, the inner tube being slidably inserted into the outer tube; a partition wall member provided in an inner periphery of the inner tube; a working oil chamber being sectioned below the partition wall member; an oil reservoir chamber being sectioned above the partition wall member; a piston support member attached to the outer tube side, the piston support member being inserted into the working oil chamber through the partition wall member; a piston sliding within the working oil chamber, the piston being provided in a leading end portion of the piston support member; a cap sealed to an upper end opening portion of the outer tube; and a single regulating portion provided in the cap. The regulating portion is arranged eccentrically with respect to a center of the cap, in a plan view of the cap.

In accordance with claim 3 of the present invention, there is provided a hydraulic shock absorber comprising: an outer tube in a vehicle body side; an inner tube in an axle side, the inner tube being slidably inserted into the outer tube; a partition wall member provided in an inner periphery of the inner tube; a working oil chamber being sectioned below the partition wall member; an oil reservoir chamber being sectioned above the partition wall member; a hollow piston rod attached to the outer tube side, the hollow piston rod being inserted into the working oil chamber through the partition wall member; a piston sliding within the working oil chamber, the piston being provided in a leading end portion of the piston rod; the working oil chamber of the inner tube being divided into a piston rod side oil chamber and a piston side oil chamber by the piston; these two oil chambers being capable of being communicated respectively by a compression side flow path and an extension side flow path provided in the piston; a compression side damping valve being provided in an outlet of the compression side flow path, and an extension side damping valve being provided in an outlet of the extension side flow path; a bypass path communicating the piston rod side oil chamber and the piston side oil chamber, the bypass path being provided in a hollow portion of the piston rod; a needle valve provided in the bypass path; a cap sealed to an upper end opening portion of the outer tube; and a regulating portion regulating a damping force generated by a passage resistance of the bypass path by moving the needle valve, the regulating portion being provided in the cap. The regulating portion is arranged eccentrically with respect to a center of the cap, in a plan view of the cap.

According to the above claims, the following operations and effects can be achieved.
(a) Since the regulating portion is arranged eccentrically with respect to the center of the cap in a plan view of the cap, the operation of the regulating portion by the rider is not obstructed by the handle bar, it is possible to improve the operability of the regulating portion and it is possible to provide a new outer appearance.
   In accordance with claim 4 of the present invention, in the invention in accordance with any one of claims 1 to 3, the regulating portion is pivoted to the cap so as to only rotate and be immovable in an axial direction.
   According to the above claims, the following operations and effects can be achieved.
(b) Since the regulating portion is pivoted to the cap so as to only rotate and be immovable in the axial direction, the regulating portion does not move upward by the rotating operation, it is possible to suppress a height, and it is possible to improve an exterior appearance as products.
   In accordance with claim 5 of the present invention, in the invention in accordance with claim 4, the regulating portion consists of an adjust bolt, and accessorily has an adjust nut corresponding to the adjust bolt, the adjust nut is provided with a thread hole with which the adjust bolt is threadably engaged, the adjust nut being fitted into an attaching collar which is fixed coaxially to the cap, and the adjust nut with which the adjust bolt is threadably engaged is structured so as to move in an axial direction by a rotating operation of the adjust bolt, by being guided to move in the axial direction with rotation preventing state via an engagement with an inner periphery of the attaching collar.
   In accordance with claim 6 of the present invention, in the invention in accordance with claim 5, the cap consists of a cap assembly in which the attaching collar is threadably attached to a lower end opening side, and the adjust bolt consists of an adjust assembly with which the adjust nut is threadably engaged.
   In accordance with claim 7 of the present invention, in the invention in accordance with claim 6, an upper end operation portion of the adjust bolt is arranged in a level which is flush with an upper surface of the cap, at a position deviating from a center of the cap, in a plan view of the cap constructing the cap assembly.
   In accordance with claim 8 of the present invention, in the invention in accordance with claim 6 or 7, the regulating portion is structured such that a guide hole is provided at a different eccentric position from the thread hole, with respect to a center axis of the adjust nut, as an adjust assembly loaded to the cap assembly, a rotation preventing pin is inserted into the guide hole, an upper end portion of the rotation preventing pin is fixedly inserted into an attaching hole provided in the cap, and a lower end portion of the rotation preventing pin is brought close to a bottom surface of a center concave portion of the attaching collar.
   According to the above claims, the following operations and effects can be achieved.
(c) When the adjust bolt constituting the regulating portion moves the adjust nut, the attaching collar is utilized, and the adjust nut can be moved and guided in the axial direction while prevented from rotation. A rotation preventing part and a guide part for the adjust nut are not separately required.

### BRIEF DESCRIPTION OF THE DRAWINGS

[FIG. 1]Fig. 1 is a general cross-sectional view showing a hydraulic shock absorber.
[FIG. 2]Fig. 2 is a cross-sectional view of a lower portion in Fig. 1.
[FIG. 3]Fig. 3 is a cross-sectional view of an intermediate portion in Fig. 1.
[FIG. 4]Fig. 4 is a cross-sectional view of an upper portion in Fig. 1.
[FIG. 5]Fig. 5 is a plan view showing a cap.
[FIG. 6]Fig. 6 is a cross-sectional view showing a regulating portion provided in the cap.
[FIG. 7]Fig. 7 is a cross-sectional view showing a modified embodiment of the regulating portion.
[FIG. 8]Fig. 8 is a plan view showing a positional relationship between the regulating portion provided in the cap and a handle bar.

### BEST MODE FOR CARRYING OUT THE INVENTION

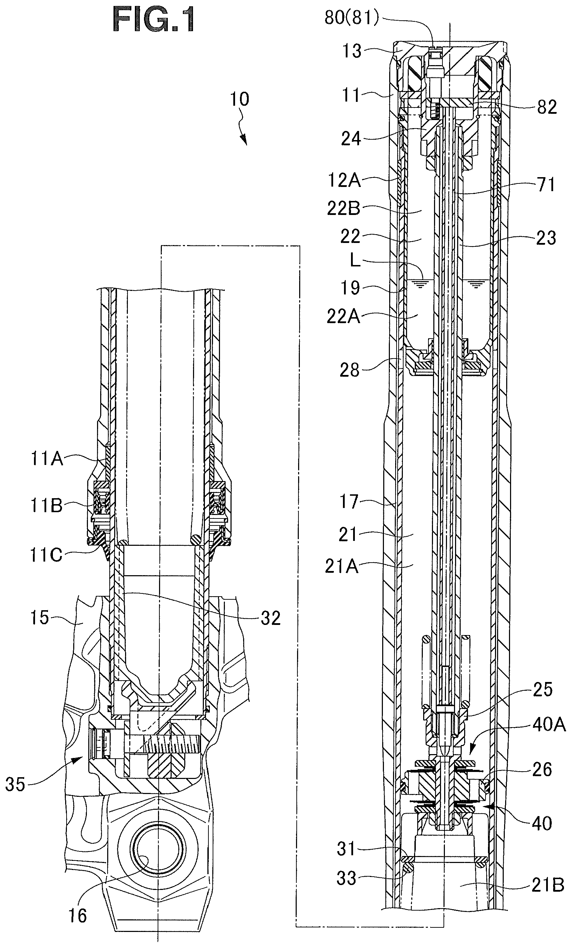

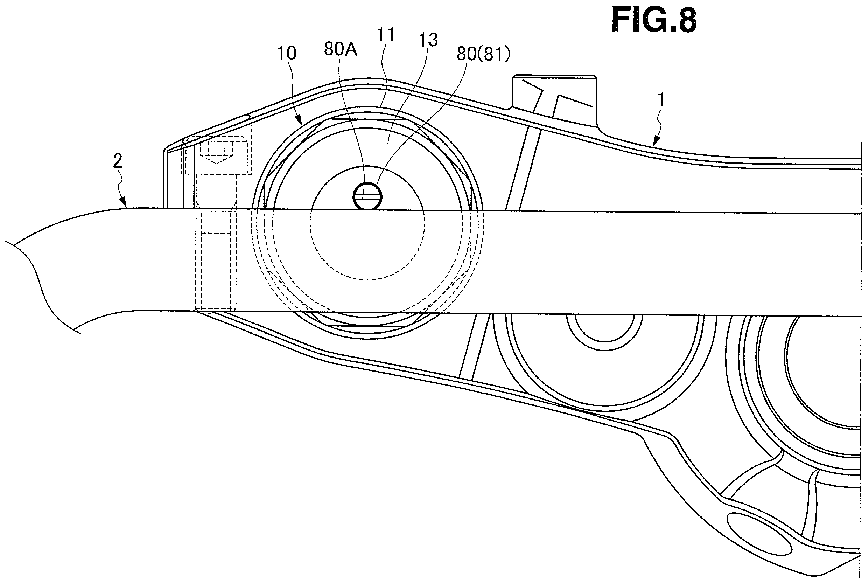

A front fork (a hydraulic shock absorber) 10 is an inverted type front fork in which an outer tube 11 is arranged in a vehicle body side and an inner tube 12 is arranged in a wheel side, and as shown in Figs. 1 to 4, the inner tube 12 is slidably inserted into an inner portion of the outer tube 11, via a guide bush 11A which is fixed to an inner periphery of a lower end opening portion of the outer tube 11 and a guide bush 12A which is fixed to an outer periphery of an upper end opening portion of the inner tube 12. Reference symbol 11B denotes an oil seal, and reference symbol 11C denotes a dust seal. A cap 13 is threadably attached to an upper end opening portion of the outer tube 11 coaxially in a liquid-tight manner so as to be sealed, and a vehicle body side bracket 1 (Fig. 8) is provided in an outer periphery of the outer tube 11. An axle bracket 15 is inserted and attached threadably in a liquid-tight manner into a lower end opening portion of the inner tube 12 so as to constitute a bottom portion of the inner tube 12, and an axle attaching hole 16 is provided in the axle bracket 15.

The front fork 10 divides an annular oil chamber 17 which is divided by an inner periphery of the outer tube 11, an outer periphery of the inner tube 12, and the two guide bushes 11A and 12A.

The front fork 10 is provided with a closed-end cup-shaped partition wall member 19 in an inner periphery close to an upper end of the inner tube 12 so as to be in a liquid-tight manner via an O-ring or the like, divides a working oil chamber 21 in a lower portion of a rod guide portion 19A in a bottom portion of the partition wall member 19, and divides an oil reservoir chamber 22 m an upper portion. In the oil reservoir chamber 22, a lower region thereof is an oil chamber 22A, and an upper region thereof is an air chamber 22B. The guide bush 12A provided in an outer periphery of an upper end portion protruding out of the inner tube 12 of the partition wall member 19 comes into slidable contact with the inner periphery of the outer tube 11.

The front fork 10 slidably inserts a piston rod 23 attached onto a center axis of the outer tube 11 into the rod guide portion 19A of the partition wall member 19. Specifically, the hollow piston rod 23 is threadably attached to an attaching collar 24 which is coaxially and threadably attached to a lower end portion of a center portion of the cap 13, and is fixed by a lock nut 24A.

The front fork 10 is structured such that a piston 26 which comes into slidable contact with an inner periphery of the inner tube 12 is fixed to a piston bolt 25 which is threadably attached to a leading end portion of the piston rod 23 inserted into the inner tube 12 from the rod guide portion 19A of the partition wall member 19, and the oil chamber 21 is divided into a piston rod side oil chamber 21A in which the piston rod 23 is accommodated, and a piston side oil chamber 21B in which the piston rod 23 is not accommodated. The piston 26 is fixed by a piston nut 27.

The front fork 10 is structured such that the annular oil chamber 17 is always communicated with the piston rod side oil chamber 21A via an oil hole 28 provided in the inner tube 12.

The front fork 10 is structured such that an upper spring receiver 31 is attached to a side of a lower end surface which faces the piston side oil chamber 21B of the piston 26, a lower spring receiver 32 is arranged in a bottom portion of the inner tube 12 formed by the axle bracket 15, and a main suspension spring 33 is interposed between the upper spring receiver 31 and the lower spring receiver 32. A whole of the main suspension spring 33 is immersed into the piston side oil chamber 21B. The front fork 10 absorbs an impact force applied from a road surface at a time when a vehicle travels, by means of an extension/retraction vibration of the main suspension spring 33. At this time, a spring load regulating apparatus 35 moves up and down the lower spring receiver 32, making it possible to regulate a spring load of the main suspension spring 33.

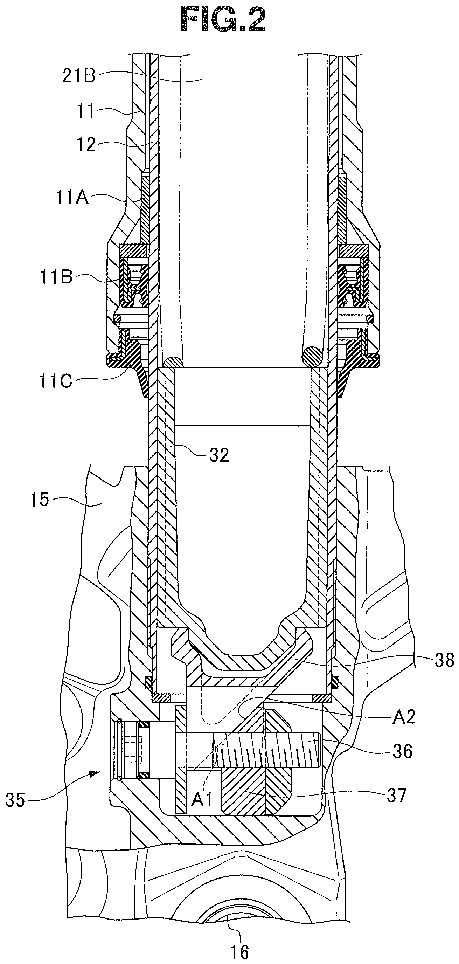

The spring load regulating apparatus 35 is provided with an adjust bolt 36 which faces outside at a position deviating from the axle attaching hole 16 of the axle bracket 15 (in the side vicinity of the axle attaching hole 16) constituting a bottom portion of the inner tube 12, in the bottom portion, as shown in Fig. 2. A slider 37 which is provided in an inner bottom portion of the axle bracket 15 (a face which is going to face a lower end portion of the lower spring receiver 32) is made movable linearly in a direction which intersects a center axis of the inner tube 12 (an axial direction of the adjust bolt 36) by a rotating force of the adjust bolt 36. The spring load of the main suspension spring 33 is regulated by mounting a lower inclined surface A1 of a lifter 38 on which the lower spring receiver 32 seats on an upper inclined surface A2 of a slider 37, and moving up and down the lower spring receiver 32 by a rotation of the adjust bolt 36.

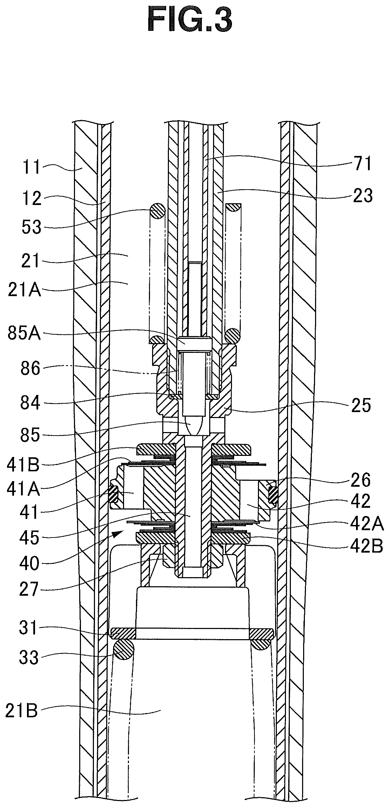

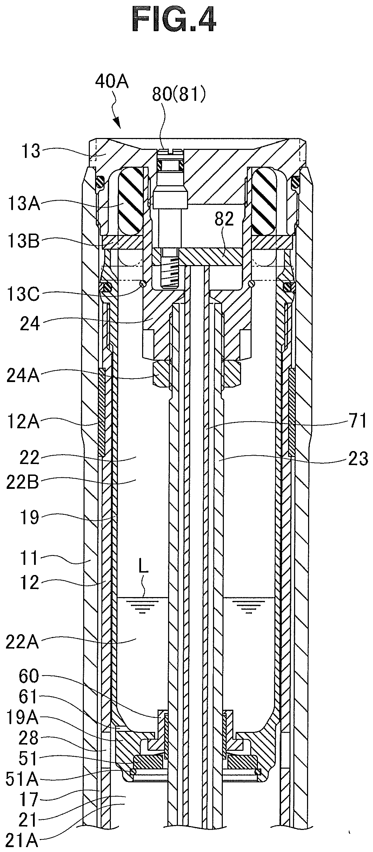

The front fork 10 is provided with a damping force generating apparatus 40 in the piston 26 (Figs. 3 and 4).

The damping force generating apparatus 40 is provided with a compression side flow path 41 and an extension side flow path 42. The compression side flow path 41 is opened and closed by a compression side disc valve 41A (a compression side damping valve) which is backed up by a valve stopper 41B. The extension side flow path 42 is opened and closed by an extension side disc valve 42A (an extension side damping valve) which is backed up by a valve stopper 42B. In this case, the valve stopper 41B, the valve 41A, the piston 26, the valve 42A and the valve stopper 42B constitute a valve assembly which is inserted and attached into the piston bolt 25, and are sandwiched by a piston nut 27 which is threadably attached to the piston bolt 25 so as to be fixed.

The damping force generating apparatus 40 is structured such that a damping force regulating apparatus 40A mentioned in detail later is provided in a center portion of the cap 13, a needle valve 85 of the damping force regulating apparatus 40A is inserted into a hollow portion of the piston rod 23, and an opening degree of a bypass path 45 provided in the piston rod 23 is regulated by an upward and downward motion of the needle valve 85. The bypass path 45 bypasses the piston 26, and communicates the piston rod side oil chamber 21A and the piston side oil chamber 21B.

The damping force generating apparatus 40 generates a compression side damping force by a passage resistance of the bypass path 45 whose opening degree is regulated by the needle valve 85 in a low speed region, and generates a compression side damping force by a deflecting deformation of the compression side disc valve 41A in middle and high speed regions, in a compression side stroke. Further, the damping force generating apparatus 40 generates an extension side damping force by a passage resistance of the bypass path 45 whose opening degree is regulated by the needle valve 85 in a low speed region, and generates an extension side damping force by a deflecting deformation of the extension side disc valve 42A in middle and high speed regions, in an extension side stroke. The extension/retraction vibration of the main suspension spring 33 mentioned above is restrained by the compression side damping force and the extension side damping force.

The front fork 10 is provided in a lower end surface of the cap 13 with a stopper rubber 13A and a stopper plate 13B with which an upper end portion of the partition wall member 19 provided in the inner tube 12 comes into contact at a maximum compression stroke, and the maximum compression stroke is regulated by this stopper rubber 13A.

The front fork 10 is structured such that a rebound spring 53 is interposed between a spring sheet 52 which is fixed to a lower end surface facing the piston rod side oil chamber 21A of the partition wall member 19 in the upper end side of the inner tube 12 by using a stopper ring 51A, and an upper end surface of the piston bolt 25. The piston bolt 25 pressurizes the rebound spring 53 with respect to the spring sheet 52 at a time of a maximum extension of the front fork 10, thereby regulating a maximum extension stroke.

Accordingly, in the front fork 10, a cross-sectional area S1 of the annular oil chamber 17 constituted by an annular gap of the outer tube 11 and the inner tube 12 is formed larger than a cross-sectional area (an area surrounded by an outer diameter) S2 of the piston rod 23 (S1 > S2).

Further, the rod guide portion 19A of the partition wall member 19 and the spring sheet 51 are provided with a check valve 60 which allows an oil flow from the oil reservoir chamber 22 to the piston rod side oil chamber 21A in the compression side stroke, and blocks the oil flow from the piston rod side oil chamber 21A to the oil reservoir chamber 22 in the extension side stroke.

Further, since an oil seal is not sealed around the piston rod 23 in the rod guide portion 19A of the partition wall member 19, a small flow path (an orifice) 61 which communicates the piston rod side oil chamber 21A and the oil reservoir chamber 22 is constituted by a small gap which a bush pressed into an inner periphery of the check valve 60 forms around the piston rod 23. The small flow path 61 is pierced in the rod guide portion 19A of the partition wall member 19, and is constituted by an orifice means which communicates the piston rod side oil chamber 21A and the oil reservoir chamber 22.

A motion of the front fork 10 is as follows.

### (Compression side stroke)

A working oil at a forward moving volumetric capacity of the piston rod 23 which goes into the inner tube 12 at the compression side stroke is transferred to the annular oil chamber 17 from the oil chamber 21A in an inner periphery of the inner tube 12 via an oil hole 28 of the inner tube 12. At this time, since a volumetric capacity increment ΔS1 (an amount of replenishment) of the annular oil chamber 17 is larger than a volumetric capacity increment ΔS2 of the piston rod 23, a shortfall (ΔS1 - ΔS2) in a necessary amount of replenishment of the oil to the annular oil chamber 17 is replenished via the check valve 60 from the oil reservoir chamber 22.

In this compression side stroke, as mentioned above, the compression side damping force is generated by the passage resistance of the bypass path 45 whose opening degree is regulated by the needle valve 85 in the low speed region, and the compression side damping force is generated by the deflecting deformation of the compression side disc valve 41A in the middle and high speed regions.

### (Extension side stroke)

The working oil at a backward moving volumetric capacity of the piston rod 23 which goes out of the inner tube 12 at the extension side stroke is transferred to the oil chamber 21A in the inner periphery of the inner tube 12 from the annular oil chamber 17 via the oil hole 28 of the inner tube 12. At this time, since a volumetric capacity decrement ΔS1 (an amount of discharge) of the annular oil chamber 17 is larger than a volumetric capacity decrement ΔS2 of the piston rod 23, a surplus (ΔS1 - ΔS2) in the amount of oil discharged from the annular oil chamber 17 is discharged to the oil reservoir chamber 22 via the small flow path 61.

In this extension side stroke, as mentioned above, the extension side damping force is generated by the passage resistance of the bypass path 45 whose opening degree is regulated by the needle valve 85 in the low speed region, and the extension side damping force is generated by the deflecting deformation of the extension side disc valve 42A in the middle and high speed regions. Further, the extension side damping force is also generated by a passage resistance of the small flow path 61 mentioned above.

A description will be given below of the damping force regulating apparatus 40A.

The damping force regulating apparatus 40A is structured, as shown in Figs. 3 and 4, such that a push rod 71 (a damping force regulating rod) is inserted into a hollow portion of the piston rod 23 which is provided on a center axis of the outer tube 11 and the cap 13, and a regulating portion 80 moving the push rod 71 in an axial direction is provided in the cap 13 corresponding to an upper portion of the front fork 10.

The regulating portion 80 regulates the damping force generated by the passage resistance of the bypass path 45 by moving the needle valve 85. A description will be given below of a structure of the regulating portion 80 and a damping force regulating structure using the needle valve 85.

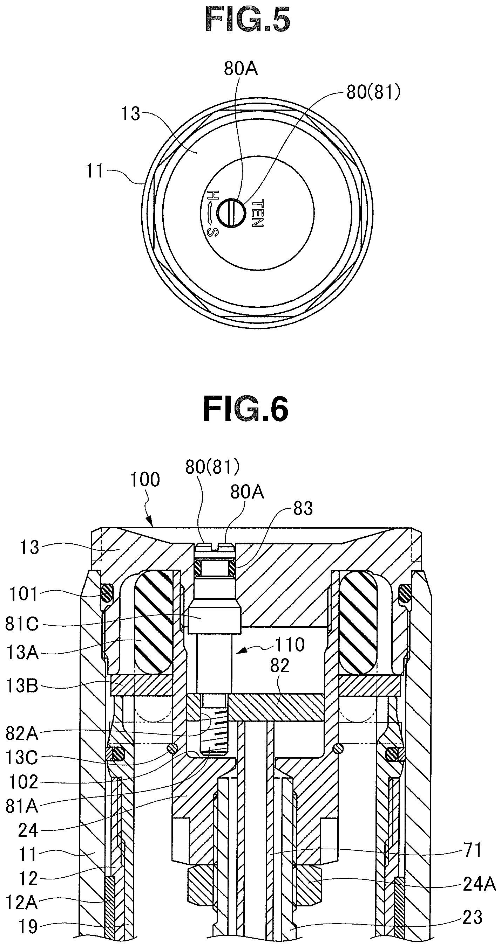

### (Structure of regulating portion 80) (Figs. 5 and 6)

The attaching collar 24 is threadably attached to the lower end opening side of the cap 13, whereby a cap assembly 100 is constituted. The cap 13 of the cap assembly 100 is threadably attached in a liquid-tight manner to an upper end opening portion of the outer tube 11 via an O-ring 101, and an upper end portion of the piston rod 23 is threadably attached to a lower end portion of the attaching collar 24 so as to be fixed by the lock nut 24A. The stopper rubber 13A is loaded to an annular concave portion formed by the cap 13 of the cap assembly 100 and the attaching collar 24, and the stopper plate 13B is inserted and attached into an outer periphery of the attaching collar 24, and a stopper ring 13C locking the stopper plate 13B is locked and attached thereto (Fig. 6).

An adjust assembly 110 is loaded to the cap 13 of the cap assembly 100 and the attaching collar 24. The adjust assembly 110 constitute the regulating portion 80 by an adjust bolt 81, and has an adjust nut 82 corresponding to the adjust bolt 81. The adjust nut 82 is fitted into the attaching collar 24, and is provided at an eccentric position with respect to the center axis of the adjust nut 82 with a thread hole 82A with which a thread portion 81A of the adjust bolt 81 is threadably engaged. Accordingly, the adjust nut 82, with which the adjust bolt 81 is threadably engaged, moves up and down in an axial direction by a rotating operation of the adjust bolt 81, by being guided in the axial direction with rotation preventing state via an engagement with the inner periphery of the attaching collar 24.

The adjust bolt 81 of the regulating portion 80 constituting the adjust assembly 110 is inserted and attached in a liquid-tight manner into a loading hole which is eccentrically arranged with respect to the center of the cap 13 via an O-ring 83 from a back surface side of the cap 13, in a plan view of the cap 13 constituting the cap assembly 100. Further, the adjust bolt 81 is stored in a center concave portion 102 of the cap assembly 100 formed by the attaching collar 24 threadably attached to the cap 13, together with the adjust nut 82, a flange portion 81C of the adjust bolt 81 is brought into contact with the lower surface of the cap 13, and a lower end surface of the adjust bolt 81 is brought close to a bottom surface of the center concave portion 102 formed by the attaching collar 24. The adjust nut 82 is slidably stored in an inner periphery of the center concave portion 102 formed by the attaching collar 24. The push rod 71 protruding out of the hollow portion of the piston rod 23 is brought into contact with the lower end surface of the adjust nut 82.

Accordingly, an upper end operation portion 80A of the adjust bolt 81 of the regulating portion 80 is arranged in a level which is flush with the upper surface of the cap 13, at a position deviating from the center of the cap 13 in a plan view of the cap 13 constituting the cap assembly 100. Further, the adjust bolt 81 of the regulating portion 80 is pivoted to the cap 13 in such a manner as to only rotate and be immovable in the axial direction. Accordingly, if the adjust bolt 81 of the regulating portion 80 is rotationally operated, the adjust nut 82 with which the adjust bolt 81 is threadably engaged moves up and down in the axial direction, and it is possible to move the push rod 71 which is brought into contact with the adjust nut 82, in the axial direction.

### (Damping force regulating structure using needle valve 85) (Fig. 3)

An inner base 84 is inserted and attached into the lower end portion of the hollow portion of the piston rod 23, and the lower end surface of the piston rod 23 and an inner diameter step portion of the piston bolt 25 fix a lower end flange of the inner base 84 in a pinching manner. The inner base 84 may be pressed into the hollow portion of the piston rod 23. The needle valve 85 is inserted in a liquid-tight manner into the inner periphery of the inner base 84 which is fixed to the piston rod 23 as mentioned above, and a spring 86 interposed between an intermediate flange portion 85A of the needle valve 85 and an upper end surface of the inner base 84 energizes the needle valve 85 upward in the axial direction (in a valve opening direction), and brings the upper end surface of the needle valve 85 into contact with the lower end surface of the push rod 71.

If the adjust bolt 81 of the regulating portion 80 moves up and down the push rod 71 in the axial direction as mentioned above, the needle valve 85 coming into contact with the push rod 71 in the axial direction moves up and down with respect to the piston bolt 25, moves forward and backward with respect to a valve seat in an upper end portion of a vertical hole of the bypass path 45 provided in the piston bolt 25, regulates the opening degree of the bypass path 45, and further can regulate the damping forces in the compression side and the extension side generated by the passage resistance of the bypass path 45.

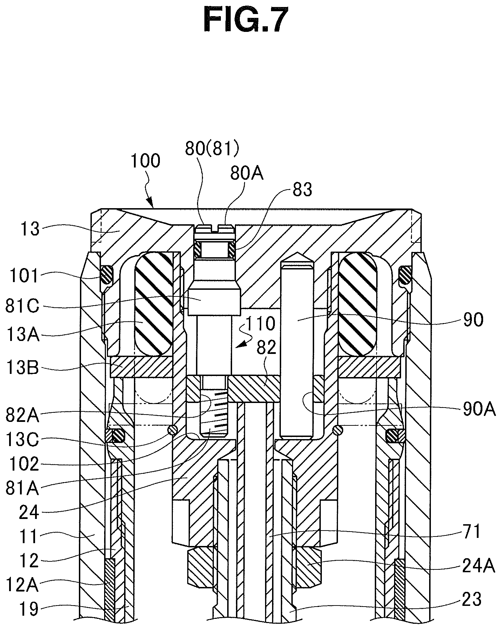

Fig. 7 is a modified embodiment of the regulating portion 80. The regulating portion 80 is structured, as shown in Fig. 7, such that a guide hole 90A is provided at an eccentric position with respect to the center axis of the adjust nut 82 (a different eccentric position from the thread hole 82A), as the adjust assembly 110 loaded to the cap assembly 100, a rotation preventing pin 90 is inserted into the guide hole 90A, an upper end portion of the rotation preventing pin 90 is fixedly inserted into an attaching hole provided in the cap 13, and a lower end portion of the rotation preventing pin 90 is brought close to a bottom surface of the center concave portion 102 of the attaching collar 24. It is possible to achieve a high precision of the rotation prevention of the adjust nut 82 by the rotation preventing pin 90, and it is further possible to make an axial moving precision of the push rod 71 with respect to an angle of rotation of the adjust bolt 81 high.

Fig. 8 shows a structure in which the right and left front forks 10 are attached to the vehicle body side bracket 1 of the motor cycle (a right side is omitted in Fig. 8), and a handle bar 2 is retained in the upper portion of the vehicle body side bracket 1. In a plan view of the vehicle body side bracket 1, the regulating portion 80 provided in the cap 13 of the front fork 10 is not obstructed by the handle bar 2, and a rider can smoothly operate the regulating portion 80 from an upper surface of the handle bar 2.

According to the present embodiment, the following operations and effects can be achieved.
(a) Since the regulating portion 80 is arranged eccentrically with respect to the center of the cap 13 in a plan view of the cap 13, the operation of the regulating portion 80 by the rider is not obstructed by the handle bar 2, it is possible to improve the operability of the regulating portion 80 and it is possible to provide a new outer appearance.
(b) Since the regulating portion 80 is pivoted to the cap 13 so as to only rotate and be immovable in the axial direction, the regulating portion 80 does not move upward by the rotating operation, it is possible to suppress a height, and it is possible to improve an exterior appearance as products.
(c) When the adjust bolt 81 constituting the regulating portion 80 moves the adjust nut 82, the attaching collar 24 is utilized, and the adjust nut 82 can be moved and guided in the axial direction while prevented from rotation. A rotation preventing part and a guide part for the adjust nut 82 are not separately required.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

### INDUSTRIAL APPLICABILITY

The present invention is structured such that the regulating portion is arranged eccentrically with respect to the center of the cap in the plan view of the cap, in the hydraulic shock absorber in which the vehicle body side tube and the axle side tube are slidably fitted, and the single regulating portion is provided in the cap which is sealed to the upper end opening portion of the vehicle body side tube. Accordingly, it is possible to improve the operability of the regulating portion and to provide the new outer appearance.

### EXPRANATIONS OF LETTERS OR NUMERALS

- 10: front fork (hydraulic shock absorber)
- 11: outer tube (vehicle body side tube)
- 12: inner tube (axle side tube)
- 13: cap
- 19: partition wall member
- 21: working oil chamber
- 21A: piston rod side oil chamber
- 21B: piston side oil chamber
- 22: oil reservoir chamber
- 23: piston rod (piston support member)
- 24: attaching collar
- 26: piston
- 41: compression side flow path
- 41A: compression side disc valve (compression side damping valve)
- 42: extension side flow path
- 42A: extension side disc valve (extension side damping valve)
- 45: bypass path
- 80: regulating portion
- 81: adjust bolt
- 82: adjust nut
- 82A: thread hole
- 85: needle valve

## Claims

1. A hydraulic shock absorber (10) comprising:
a vehicle body side tube (11);
an axle side tube (12), the vehicle body side tube (11) and the axle side tube (12) being slidably fitted;
a cap (13) sealed to an upper end opening portion of the vehicle body side tube (11);
a single regulating portion (80) provided in the cap (13), and
a rod (71), inserted into a hollow portion of a piston rod (23), the piston rod (23) being provided on a center axis of the vehicle body side tube (11) and the cap (13), wherein the rod (71) is arranged on the center axis of the cap (13) and configured to be moved in an axial direction by the regulating portion (80),
**characterized in that**
the regulating portion (80) is arranged eccentrically with respect to the rod (71), which is arranged on the center of the cap (13) in a plan view of the cap (13).

2. A hydraulic shock absorber (10) according to claim 1, :
wherein the vehicle body side tube (11) is an outer tube in a vehicle body side; and
the axle side tube (12) is an inner tube in an axle side, the inner tube being slidably inserted into the outer tube; and the shock absorber (10) further comprising: a partition wall member (19) provided in an inner periphery of the inner tube (12);
a working oil chamber (21) being sectioned below of the partition wall member (19);
an oil reservoir chamber (22) being sectioned above the partition wall member (19);
the piston rod (23) being attached to the outer tube side (11), the piston rod (23) being inserted into the working oil chamber (21) through the partition wall member (19);
a piston (26) sliding within the working oil chamber (21), the piston (26) being provided in a leading end portion of the piston rod (23).

3. A hydraulic shock absorber according to claim 2, wherein:
the working oil chamber (21) of the inner tube (12) being divided into a piston rod side oil chamber (21A) and a piston side oil chamber (21B) by the piston (26);
these two oil chambers (21A, 21B) being capable of being communicated respectively by a compression side flow path (41) and an extension side flow path (42) provided in the piston (26);
a compression side damping valve (41A) being provided in an outlet of the compression side flow path (41), and an extension side damping valve (42A) being provided in an outlet of the extension side flow path (42);
a bypass path (45) communicating the piston rod side oil chamber (21A) and the piston side oil chamber (21B), the bypass path (45) being provided in a hollow portion of the piston rod (23);
a needle valve (85) provided in the bypass path (45);
the regulating portion (80) regulating a damping force generated by a passage resistance of the bypass path (45) by moving the needle valve (85).

4. The hydraulic shock absorber (10) according to any one of claims 1 to 3, wherein the regulating portion (80) is pivoted to the cap (13) so as to only rotate and be immovable in an axial direction.

5. The hydraulic shock absorber (10) according to claim 4, wherein the regulating portion (80) consists of an adjust bolt (81), and accessorily has an adjust nut (82) corresponding to the adjust bolt (81),
the adjust nut (82) is provided with a thread hole (82A) with which the adjust bolt (81) is threadably engaged, the adjust nut (82) being fitted into an attaching collar (24) which is fixed coaxially to the cap (13), and
the adjust nut (82) with which the adjust bolt (81) is threadably engaged is structured so as to move in an axial direction by a rotating operation of the adjust bolt (81), by being guided to move in the axial direction with rotation preventing state via an engagement with an inner periphery of the attaching collar (24).

6. The hydraulic shock absorber (10) according to claim 5, wherein the cap (13) consists of a cap assembly (100) in which the attaching collar (24) is threadably attached to a lower end opening side, and the adjust bolt (81) consists of an adjust assembly (110) with which the adjust nut (82) is threadably engaged.

7. The hydraulic shock absorber (10) according to claim 6, wherein an upper end operation portion (80A) of the adjust bolt (81) is arranged in a level which is flush with an upper surface of the cap (13), at a position deviating from a center of the cap (13), in a plan view of the cap (13) constituting the cap assembly (100).

8. The hydraulic shock absorber (10) according to claim 6 or 7, wherein the regulating portion (80) is structured such that a guide hole (90A) is provided at a different eccentric position from the thread hole (82A), with respect to a center axis of the adjust nut (82), as an adjust assembly (110) loaded to the cap assembly (100), a rotation preventing pin (90) is inserted into the guide hole (90A), an upper end portion of the rotation preventing pin (90) is fixedly inserted into an attaching hole provided in the cap (13), and a lower end portion of the rotation preventing pin (90) is brought close to a bottom surface of a center concave portion (102) of the attaching collar (24).

## Patentansprüche

1. Hydraulischer Stoßdämpfer (10), der Folgendes umfasst:
ein fahrzeugkarosserieseitiges Rohr (11);
ein achsseitiges Rohr (12), wobei das fahrzeugkarosserieseitige Rohr (11) und das achsseitige Rohr (12) gleitfähig montiert sind;
eine Kappe (13), die an einem Öffnungsabschnitt am oberen Ende des fahrzeugkarosserieseitigen Rohrs (11) verschlossen ist;
einen einzelnen in der Kappe (13) vorgesehenen Regulierabschnitt (80), und
eine in einen hohlen Abschnitt einer Kolbenstange (23) eingeführte Stange (71), wobei die Kolbenstange (23) auf einer Mittelachse des fahrzeugkarosserieseitigen Rohrs (11) und der Kappe (13) vorgesehen ist, wobei die Kolbenstange (71) auf der Mittelachse der Kappe (13) angeordnet und zum Bewegen in einer axialen Richtung durch den Regulierabschnitt (80) konfiguriert ist,
**dadurch gekennzeichnet, dass** der Regulierabschnitt (80) exzentrisch mit Bezug auf die Stange (71) angeordnet ist, die in der Mitte der Kappe (13) in einem Grundriss der Kappe (13) angeordnet ist.

2. Hydraulischer Stoßdämpfer (10) nach Anspruch 1, wobei
das fahrzeugkarosserieseitige Rohr (11) ein äußeres Rohr in einer Fahrzeugkarosserieseite ist; und
das achsseitige Rohr (12) ein inneres Rohr in einer Achsseite ist, wobei das innere Rohr gleitfähig in das äußere Rohr eingeführt wird; wobei der Stoßdämpfer (10) ferner Folgendes umfasst:
ein Trennwandelement (19), das in einer inneren Peripherie des inneren Rohrs (12) vorgesehen ist;
eine Arbeitsölkammer (21), die unterhalb des Trennwandelements (19) sektioniert ist;
eine Ölreservoirkammer (22), die oberhalb des Trennwandelements (19) sektioniert ist,
wobei die Kolbenstange (23) an der äußeren Rohrseite (11) angebracht ist, wobei die Kolbenstange (23) durch das Trennwandelement (19) in die Arbeitsölkammer (21) eingeführt ist;
einen Kolben (26), der in der Arbeitsölkammer (21) gleitet, wobei der Kolben (26) in einem vorderen Endabschnitt der Kolbenstange (23) vorgesehen ist.

3. Hydraulischer Stoßdämpfer nach Anspruch 2, wobei:
die Arbeitsölkammer (21) des inneren Rohrs (12) durch den Kolben (26) in eine kolbenstangenseitige Ölkammer (21A) und eine kolbenseitige Ölkammer (21B) unterteilt wird;
wobei diese beiden Ölkammern (21A, 21B) jeweils durch einen im Kolben (26) vorgesehenen kompressionsseitigen Strömungspfad (41) und einen ausfahrseitigen Strömungspfad (42) in Verbindung gebracht werden können;
wobei ein kompressionsseitiges Dämpfungsventil (41A) in einem Auslass des kompressionsseitigen Strömungspfads (41) vorgesehen ist und ein ausfahrseitiges Dämpfungsventil (42A) in einem Auslass des ausfahrseitigen Strömungspfads (42) vorgesehen ist;
einen Umgehungspfad (45), der die kolbenstangenseitige Ölkammer (21A) und die kolbenseitige Ölkammer (21B) miteinander in Verbindung bringt, wobei der Umgehungspfad (45) in einem hohlen Abschnitt der Kolbenstange (23) vorgesehen ist;
ein im Umgehungspfad (45) vorgesehenes Nadelventil (85) ;
wobei der Regulierabschnitt (80) durch Bewegen des Nadelventils (85) eine durch einen Passagewiderstand des Umgehungspfads (45) erzeugte Dämpfungskraft reguliert.

4. Hydraulischer Stoßdämpfer (10) nach einem der Ansprüche 1 bis 3, wobei der Regulierabschnitt (80) so an der Kappe (13) angelenkt ist, dass er nur rotiert und in einer axialen Richtung unbeweglich ist.

5. Hydraulischer Stoßdämpfer (10) nach Anspruch 4, wobei der Regulierabschnitt (80) aus einer Einstellschraube (81) besteht und zusätzlich eine Einstellmutter (82) entsprechend der Einstellschraube (81) hat,
die Einstellmutter (82) mit einem Gewindeloch (82A) versehen ist, in das die Einstellschraube (81) eingeschraubt wird, wobei die Einstellschraube (82) in einen Montageflansch (24) gesetzt ist, der koaxial zur Kappe (13) befestigt ist, und
die Einstellmutter (82), mit der die Einstellschraube (81) im Schraubeingriff ist, so strukturiert ist, dass sie sich in einer axialen Richtung durch einen Drehvorgang der Eisntellschraube (81) bewegt, indem sie für eine Bewegung in der axialen Richtung mit einem rotationsverhindernden Zustand über einen Eingriff mit einer Innenperipherie des Montageflanschs (24) geführt wird.

6. Hydraulischer Stoßdämpfer (10) nach Anspruch 5, wobei die Kappe (13) aus einer Kappenbaugruppe (100) besteht, in der der Befestigungsflansch (24) an eine Öffnungsseite am unteren Ende angeschraubt ist, und die Einstellschraube (81) aus einer Einstellbaugruppe (110) besteht, mit der die Einstellmutter (82) im Schraubeingriff ist.

7. Hydraulischer Stoßdämpfer (10) nach Anspruch 6, wobei ein Betriebsabschnitt (80A) der Einstellschraube (81) am oberen Ende in einer Höhe angeordnet ist, die bündig mit einer Oberseite der Kappe (13) ist, in einer Position, die von einer Mitte der Kappe (13) abweicht, in einem Grundriss der Kappe (13), die die Kappenbaugruppe (100) bildet.

8. Hydraulischer Stoßdämpfer (10) nach Anspruch 6 oder 7, wobei der Regulierabschnitt (80) so strukturiert ist, dass ein Führungsloch (90A) in einer anderen exzentrischen Position vom Gewindeloch (82A) mit Bezug auf eine mittlere Achse der Einstellmutter (82)vorgesehen ist, während eine Einstellbaugruppe (110) auf die Kappenbaugruppe (100) geladen wird, ein Rotationsverhütungsstift (90) in das Führungsloch (90A) eingeführt wird, ein oberer Endabschnitt des Rotationsverhütungsstifts (90) fest in ein in der Kappe (13) vorgesehenes Befestigungsloch eingeführt wird, und ein unterer Endabschnitt des Rotationsverhütungsstifts (90) nahe an eine Bodenfläche eines mittleren konkaven Abschnitts (102) des Montageflanschs (24) gebracht wird.

## Revendications

1. Amortisseur hydraulique (10) comportant :
un tube côté carrosserie de véhicule (11) ;
un tube côté essieu (12), le tube côté carrosserie de véhicule (11) et le tube côté essieu (12) étant ajustés de manière coulissante ;
un capuchon (13) scellé au niveau d'une partie d'ouverture d'extrémité supérieure du tube côté carrosserie de véhicule (11) ;
une partie de régulation simple (80) mise en œuvre dans le capuchon (13), et
une tige (71), insérée dans une partie creuse d'une tige de piston (23), la tige de piston (23) étant mise en œuvre sur un axe central du tube côté carrosserie de véhicule (11) et du capuchon (13), dans lequel la tige (71) est agencée sur l'axe central du capuchon (13) et est configurée à des fins de déplacement dans une direction axiale par la partie de régulation (80),
**caractérisé en ce que** la partie de régulation (80) est agencée de manière excentrée par rapport à la tige (71), qui est agencée sur le centre du capuchon (13), dans une vue en plan du capuchon (13).

2. Amortisseur hydraulique (10) selon la revendication 1, :
dans lequel le tube côté carrosserie de véhicule (11) est un tube extérieur se trouvant d'un côté carrosserie de véhicule ; et
le tube côté essieu (12) est un tube intérieur se trouvant d'un côté essieu, le tube intérieur étant inséré de manière coulissante dans le tube extérieur ; et l'amortisseur (10) comportant par ailleurs : un élément formant paroi de séparation (19) mis en œuvre dans une périphérie intérieure du tube intérieur (12) ;
une chambre d'huile de travail (21) qui est sectionnée en dessous de l'élément formant paroi de séparation (19) ;
une chambre de réservoir d'huile (22) qui est sectionnée au-dessus de la paroi de séparation (19) ;
la tige de piston (23) étant attachée au côté tube extérieur (11), la tige de piston (23) étant insérée dans la chambre d'huile de travail (21) au travers de l'élément formant paroi de séparation (19) ;
un piston (26) coulissant à l'intérieur de la chambre d'huile de travail (21), le piston (26) étant mis en œuvre dans une partie d'extrémité avant de la tige de piston (23).

3. Amortisseur hydraulique selon la revendication 2, dans lequel :
la chambre d'huile de travail (21) du tube intérieur (12) est divisée en une chambre d'huile côté tige de piston (21A) et une chambre d'huile côté piston (21B) par le piston (26) ;
ces deux chambres d'huile (21A, 21B) sont en mesure d'être mises respectivement en communication par un chemin d'écoulement côté compression (41) et un chemin d'écoulement côté extension (42) mis en œuvre dans le piston (26) ;
un clapet d'amortissement côté compression (41A) est mis en œuvre dans une sortie du chemin d'écoulement côté compression (41), et un clapet d'amortissement côté extension (42A) est mis en œuvre dans une sortie du chemin d'écoulement côté extension (42) ;
un chemin de dérivation (45) assure la communication entre la chambre d'huile côté tige de piston (21A) et la chambre d'huile côté piston (21B), le chemin de dérivation (45) étant mis en œuvre dans une partie creuse de la tige de piston (23) ;
un robinet à pointeau (85) est mis en œuvre dans le chemin de dérivation (45) ;
la partie de régulation (80) régule une force d'amortissement générée par une résistance de passage du chemin de dérivation (45) par le déplacement du robinet à pointeau (85).

4. Amortisseur hydraulique (10) selon l'une quelconque des revendications 1 à 3, dans lequel la partie de régulation (80) est pivotée jusqu'au capuchon (13) de manière à uniquement tourner et être fixe dans une direction axiale.

5. Amortisseur hydraulique (10) selon la revendication 4, dans lequel la partie de régulation (80) est constituée d'un boulon de réglage (81), et a accessoirement un écrou de réglage (82) correspondant au boulon de réglage (81),
l'écrou de réglage (82) comporte un trou fileté (82A) au moyen duquel le boulon de réglage (81) est mis en prise par filetage, l'écrou de réglage (82) étant ajusté dans un collier de fixation (24) qui est fixé de manière coaxiale sur le capuchon (13), et
l'écrou de réglage (82) au moyen duquel le boulon de réglage (81) est mis en prise par filetage est structuré de manière à se déplacer dans une direction axiale par une opération de rotation du boulon de réglage (81), en étant guidé à des fins de déplacement dans la direction axiale avec l'état anti-rotation par le biais d'une mise en prise avec une périphérie intérieure du collier de fixation (24).

6. Amortisseur hydraulique (10) selon la revendication 5, dans lequel le capuchon (13) est constitué d'un ensemble formant capuchon (100) dans lequel le collier de fixation (24) est attaché par filetage au niveau d'un côté d'ouverture d'extrémité inférieure, et le boulon de réglage (81) est constitué d'un ensemble de réglage (110) au moyen duquel l'écrou de réglage (82) est mis en prise par filetage.

7. Amortisseur hydraulique (10) selon la revendication 6, dans lequel une partie de fonctionnement d'extrémité supérieure (80A) du boulon de réglage (81) est agencée à un niveau qui est dans l'alignement d'une surface supérieure du capuchon (13), au niveau d'une position déviant d'un centre du capuchon (13), dans une vue en plan du capuchon (13) constituant l'ensemble formant capuchon (100).

8. Amortisseur hydraulique (10) selon la revendication 6 ou la revendication 7, dans lequel la partie de régulation (80) est structurée de telle sorte qu'un trou de guidage (90A) est mis en œuvre au niveau d'une différente position excentrée par rapport au trou fileté (82A), par rapport à un axe central de l'écrou de réglage (82), sous la forme d'un ensemble de réglage (110) chargé sur l'ensemble formant capuchon (100), un broche anti-rotation (90) est insérée dans le trou de guidage (90A), une partie d'extrémité supérieure de la broche anti-rotation (90) est insérée de manière fixe dans un trou de fixation mis en œuvre dans le capuchon (13), et une partie d'extrémité inférieure de la broche anti-rotation (90) est rapprochée d'une surface inférieure d'une partie concave centrale (102) du collier de fixation (24).
